# EUROPÄISCHE PATENTANMELDUNG

(11) **EP 2 075 299 A1**
(43) Veröffentlichungstag der Anmeldung: **01.07.2009**
(21) Anmeldenummer: 08007210.1
(22) Anmeldetag: 11.04.2008
(51) Int. Cl.: C09K 5/10

(54) **Wärmeträger**

(30) Priorität: 19.12.2007 DE 102007061237
(71) Anmelder: Linde AG, 80807 München (DE)
(72) Erfinder: Reinhardt, Hans-Jürgen, 87600 Kaufbeuren (DE); Wolf, Stefan, 85540 Haar (DE)
(74) Vertreter: Schüssler, Andrea

(57) **Zusammenfassung**

Die vorliegende Erfindung betrifft einen Wärmeträger der durch entsprechende Mischung seiner beiden Komponenten optimal auf den Einsatzfall in einem Temperaturbereich von -150°C bis +150°C vorzugsweise im Temperaturbereich von -130°C bis +150°C in einem Kühl- und/oder Heizsystem eingesetzt werden kann.

## Beschreibung

Die vorliegende Erfindung betrifft einen Wärmeträger, der in einem Temperaturbereich von -150°C bis +150°C einsetzbar ist.

In der chemischen und pharmazeutischen Industrie werden häufig Verfahren durchgeführt, deren Temperatur in einem sehr weiten Temperaturbereich eingestellt werden muss. Die Temperierung eines Apparates oder einer Prozesseinheit erfolgt mittels einer Wärmeübertragungsanlage, die einen oder mehrere Kühl- bzw. Wärmekreisläufe enthält, in denen ein oder mehrere Wärmeträger geführt werden. Der Wärmeträger wird in einem Wärmetauscher entsprechend der gewünschten Prozesstemperatur abgekühlt und/oder in einem zweiten Wärmetauscher erwärmt und in einem den Apparat oder die Prozesseinheit enthaltenden Kreislauf umgepumpt.

Als Wärmeträger werden in der Regel synthetische Öle verwendet. Da der Schmelzpunkt der synthetischen Öle minimal -110°C beträgt und die Viskosität der synthetischen Öle bei tiefen Temperaturen auf so hohe Werte ansteigt, dass diese nicht mehr umgepumpt werden können, sind synthetische Öle auf den Einsatzbereich oberhalb von etwa -95°C beschränkt.

Aus der DE 42 40 306 C2 ist die Verwendung von Methylcyclopentan als Wärmeträger bekannt. Aufgrund des niedrigen Schmelzpunkts und der Tatsache, dass die Viskosität dieses Mediums bei tiefen Temperaturen nur geringfügig zunimmt, findet Methylcyclopentan im Temperaturbereich bis -130°C als Wärmeträger Verwendung.

Aus der DE 100 31 020 A1 geht ein Wärmeträger für tiefe Temperaturen hervor. Es ist vorgesehen einen nichtzyklischen, mindestens fünf Kohlenstoffatome enthaltenden Kohlenwasserstoff als Wärmeträger bei einer Temperatur zwischen -150°C und +120°C zu verwenden.

Der Siedepunkt des Wärmeträgers gibt die obere Temperaturgrenze unter Normalbedingungen vor. Durch die Beaufschlagung des Wärmeträgers mit einem Druck zwischen 1 bar und 5 bar, vorzugsweise zwischen 1,5 bar und 3,5 bar, verschiebt sich der Siedepunkt des Wärmeträgers. Damit kann der Einsatzbereich des Wärmeträgers auf Temperaturen von +120°C und mehr erweitert werden.

Die meisten bekannten Wärmeträger sind nur in einem eng begrenzten Temperaturbereich einsetzbar. Einige haben bei tiefen Temperaturen eine zu hohe Viskosität. Die Viskosität ist ein besonders wichtiges Kriterium für die Gewährleistung einer guten Pumpfähigkeit. Sie beeinflusst aber auch die Wärmeübertragung. Andere Wärmeträger haben bei hohen Temperaturen einen zu hohen Dampfdruck, was das Rohrleitungssystem und den Expansionsbehälter für den Wärmeträger aufwändig und teuer macht. Diese Effekte führen zu hohen Kosten und bei speziellen Anwendungsfällen dazu, dass zwei Wärmeträger, einer zum Kühlen und einer zum Heizen, verwendet werden müssen. Bekannte Wärmeträger sind beispielsweise Methylcyclopentan (Hersteller: Merck), Syltherm XLT (Hersteller: DOW), Marlotherm X (Hersteller: Sasol), Paracryol Öl (Hersteller: Sulzer AG) und Therminol D-12 (Hersteller: Fragol), die aber hinsichtlich oben genannter Kriterien nicht voll überzeugen können.

Aufgabe der Erfindung ist es deshalb, einen Wärmeträger bereitzustellen, der in einem Kühl- und/oder Heizsystem in einem Temperaturbereich von -150°C bis +150°C eingesetzt werden kann. Zudem soll dieser Wärmeträger thermisch stabil und nicht korrosiv sein.

Die Aufgabe wird mit einem Wärmeträger mit den Merkmalen des Anspruchs 1 gelöst.

Vorteilhafte Weiterbildungen sind in den Unteransprüchen angegeben.

Erfindungsgemäß ist die Verwendung einer Mischung aus Propylcyclopentan und 2-Methylpentan als Wärmeträger vorgesehen.

Durch Veränderung des Mischungsverhältnisses des Wärmeträgers ist es möglich, die Viskosität und den Gefrierpunkt des Wärmeträgers an die jeweiligen Anforderungen anzupassen. Es hat sich dabei herausgestellt, dass schon mengenmäßig kleine Zusätze des jeweils anderen Stoffs zu den Reinstoffen Propylcylopentan bzw. 2-Methylpentan deren Eigenschaften ändern und sich das Gemisch davon hinsichtlich z.B. Gefrier- und Siedepunkt, Dampfdruck und Viskosität unterscheidet.

Die Erfindung wird beispielhaft anhand der Figuren erläutert. Es zeigen dabei schematisch,
- Figur 1:: eine Wärmeübertragungsanlage zur Temperierung eines chemischen Reaktors,
- Figur 2:: eine Tabelle zur Darstellung des Einflusses des Mischungsverhältnisses des erfindungsgemäßen Wärmeträgers auf die Viskosität,
- Figur 3:: eine Tabelle zur Darstellung des Einflusses des Mischungsverhältnisses des erfindungsgemäßen Wärmeträgers auf den Dampfdruck.
- Figur 4:: eine Tabelle zur Darstellung des Einflusses des Mischungsverhältnisses auf Siede- und Gefrierpunkt des erfindungsgemäßen Wärmeträgers
- Figur 5:: eine Tabelle zum Vergleich verschiedener bekannter Wärmeträger mit Gemischen aus PCP und 2-MP im Verhältnis 99:1 und 1:99

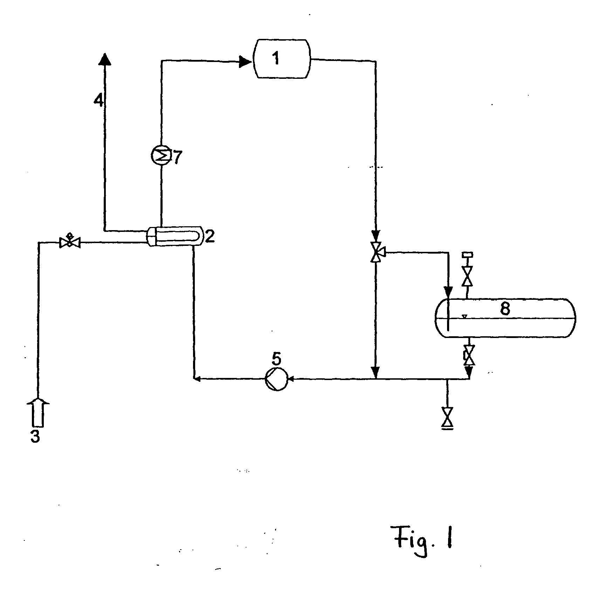

In einem Reaktor 1 werden chemische Reaktionen durchgeführt, die es erforderlich machen, in dem Reaktor 1 Temperaturen zwischen -150°C und +150°C einzustellen (Fig. 1). Hierzu wird der Reaktor 1 mit Hilfe eines im Kreislauf geführten Wärmeträgers temperiert. Als Wärmeträger werden Stoffgemische aus Propylcyclopentan und 2-Methylpentan verwendet.

Zur Erzielung tiefer Temperaturen werden die Stoffgemische aus Propylcyclopentan und 2-Methylpentan in einem Wärmetauscher 2 gegen flüssigen Stickstoff 3 abgekühlt. Der flüssige Stickstoff wird beispielsweise von einem Flüssigstickstoffbehälter bereitgestellt. Der verdampfende Stickstoff wird über eine Leitung 4 abgezogen. Das abgekühlte Propylcyclopentan/2-Methylpentan-Gemisch kühlt in indirektem Wärmeaustausch den Reaktor 1 ab. Der erwärmte Wärmeträger wird dann mit der Pumpe 5 zum Wärmetauscher 2 zurückgepumpt und wieder abgekühlt. Die Temperatur des Reaktors 1 wird über die Temperatur des Wärmeträgers nach dem Wärmetauscher 2 geregelt.

Zur Erwärmung des Reaktors 1 auf Temperaturen bis zu +150°C ist in den Kreislauf ein zweiter Wärmetauscher 7 geschaltet, in dem das Stoffgemisch aus Propylcyclopentan und 2-Methylpentan erhitzt wird. Aufgrund des sehr breiten Temperaturbereichs von bis zu 300 K, der von dem Wärmeträger durchfahren wird, ist es notwendig, an den Wärmeträgerkreislauf einen Expansionsbehälter 8 anzuschließen, um die mit der Temperaturänderung einhergehende Volumenänderung des Wärmeträgers auszugleichen. Der zweite Wärmetauscher kann beispielsweise mit über einen Verdampfer erhitzten Stickstoff betrieben werden.

Tabelle 1 gibt einen Überblick über die Stoffeigenschaften des erfindungsgemäßen Wärmeträgers in verschiedenen Mischungsverhältnissen:

**Tabelle 1**

| | | Anteil | Temperatur | Viskosität | Gefrierpunkt | Dampfdruck |
|---|---|---|---|---|---|---|
| | | PCP:2-MP | bei Viskosität | | linearer Ansatz | |
| | | | | | | |
| | | | | Druck 10 bar(a) | | Temp. +150 °C |
| | | | | | | |
| | | Ma.-% | °C | Pa s | °C | bar(a) |
| | | | | | | |
| Stoff 13 | PCP : 2-MP | 99:01 | -112,4 | 0,0205 | -117,4 | 1,67 |
| Stoff 12 | PCP : 2-MP | 95:05 | -113,9 | 0,0192 | -118,9 | 2,02 |
| Stoff 11 | PCP : 2-MP | 90:10 | -115,7 | 0,0176 | -120,7 | 2,46 |
| Stoff 10 | PCP : 2-MP | 80:20 | -119,4 | 0,0149 | -124,4 | 3,30 |
| Stoff 9 | PCP : 2-MP | 70:30 | -123,1 | 0,0124 | -128,1 | 4,09 |
| Stoff 8 | PCP : 2-MP | 60:40 | -126,8 | 0,0103 | -131,8 | 4,85 |
| Stoff 7 | PCP : 2-MP | 50:50 | -130,5 | 0,0084 | -135,5 | 5,59 |
| Stoff 6 | PCP : 2-MP | 40:60 | -134,2 | 0,0068 | -139,2 | 6,30 |
| Stoff 5 | PCP : 2-MP | 30:70 | -137,9 | 0,0054 | -142,9 | 6,99 |
| Stoff 4 | PCP : 2-MP | 20:80 | -141,6 | 0,0043 | -146,6 | 7,67 |
| Stoff 3 | PCP : 2-MP | 10:90 | -145,3 | 0,0033 | -150,3 | 8,34 |
| Stoff 2 | PCP : 2-MP | 05:95 | -147,2 | 0,0028 | -152,2 | 8,68 |
| Stoff 1 | PCP : 2-MP | 01:99 | -148,6 | 0,0025 | -153,6 | 8,95 |

Bei den Stoffen 1, 2, 3, 4, 5 und 6 liegen die Zusammensetzungen der Stoffgemische im Mischungsverhältnis von Propylcyclopentan zu 2-Methylpentan von 1:99 bis 40:60. Die Stoffe können in einem Temperaturbereich von -150 °C auf bis zu +150 °C eingesetzt werden. Im Temperaturbereich von -150 °C bis -134 °C liegt die Viskosität dieser Stoffe zwischen 0,0025 und 0,0068 Pa s. Durch diese niedrige Viskosität können diese Stoffe auch bei tiefen Temperaturen gut umgepumpt werden. Der Dampfdruck der Stoffe liegt bei +150 °C zwischen 6,30 und 8,95 bar(a). Wärmeübertragungsanlagen, in denen diese Stoffe eingesetzt werden sollen, müssen aufgrund des Dampfdrucks bei +150 °C in der Nenndruckstufe PN 10 ausgeführt werden.

Die Zusammensetzungen von Propylcyclopentan zu 2-Methylpentan liegen für die Stoffe 7, 8, 9 und 10 im Bereich von 50:50 bis 80:20. Diese Stoffe können für einen Temperaturbereich von -130 °C bis zu +150 °C verwendet werden. Für Temperaturen im Bereich von -130 °C und -119 °C liegt die Viskosität dieser Stoffe zwischen 0,0084 und 0,0149 Pa s. Diese Stoffe weisen einen Dampfdruck bei +150 °C von 3,30 bis 5,59 bar(a) auf. Wärmeübertragungsanlagen, in denen die Stoffe 7, 8, 9 und 10 als Wärmeträger eingesetzt werden sollen, müssen den Anforderungen der Nenndruckstufe PN 6 genügen.

Bei den Stoffen 11, 12 und 13 liegen die Zusammensetzungen von Propylcyclopentan zu 2-Methylpentan im Bereich von 90:10 bis zu 99:1. Diese Stoffe können für einen Temperaturbereich von -112 °C bis +150 °C verwendet werden. Die Viskosität bewegt sich bei Temperaturen zwischen -115 °C und -112 °C zwischen 0,0176 und 0,0205 Pa s. Bei +150 C ist der Dampfdruck für diese Stoffe niedrig und liegt zwischen 1,67 und 2,46 bar(a). Als Nenndruckstufe für Wärmeübertragungsanlagen muss PN 2,5 gewählt werden.

Mit steigendem Anteil an 2-Methylpentan wird der Einsatzbereich des Wärmeträgers durch die Herabsetzung des Schmelzpunktes zu tiefen Temperaturen hin erweitert. Die Viskosität des Stoffes nimmt ab, so dass die erforderliche Pumpenleistung sinkt. Die Wärmeübertragung wird durch die niedrigere Viskosität verbessert. Eine Erhöhung des Anteils an Propylcyclopentan führt zu einer Erniedrigung des Dampfdruckes, insbesondere bei hohen Temperaturen. Wärmeübertragungsanlagen können für diese Stoffe in einer niedrigen Druckstufe ausgeführt werden.

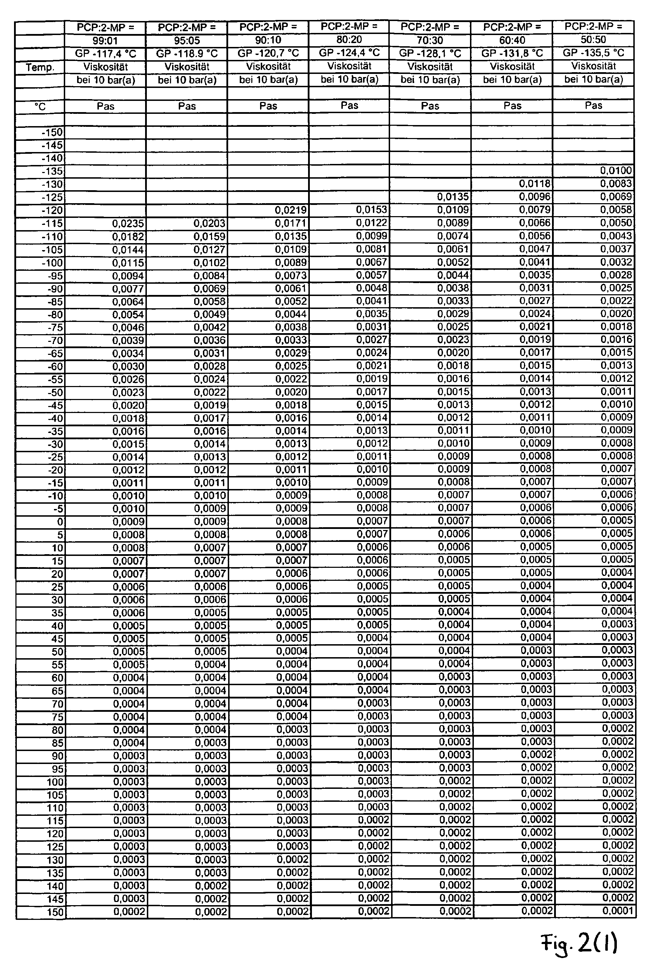

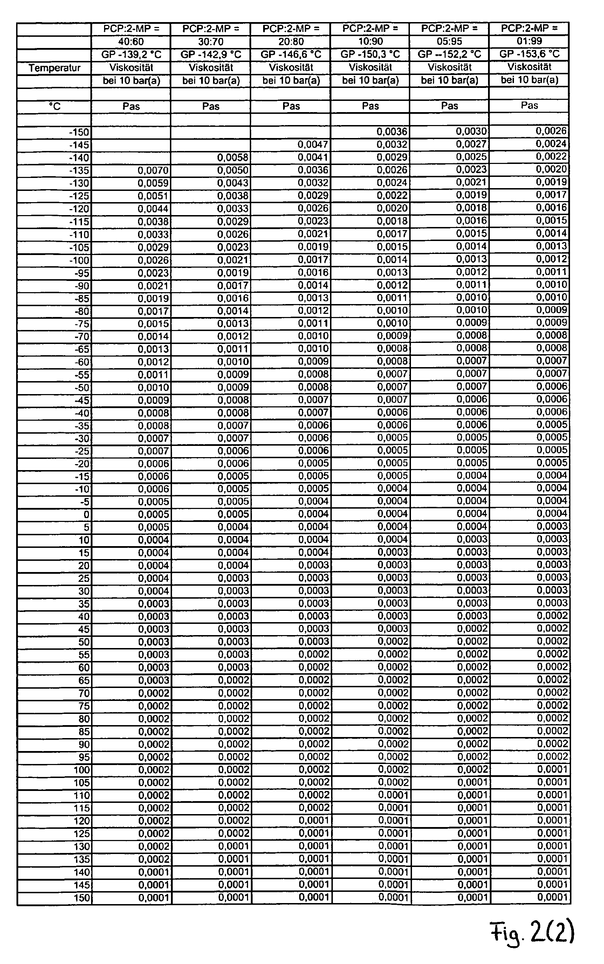

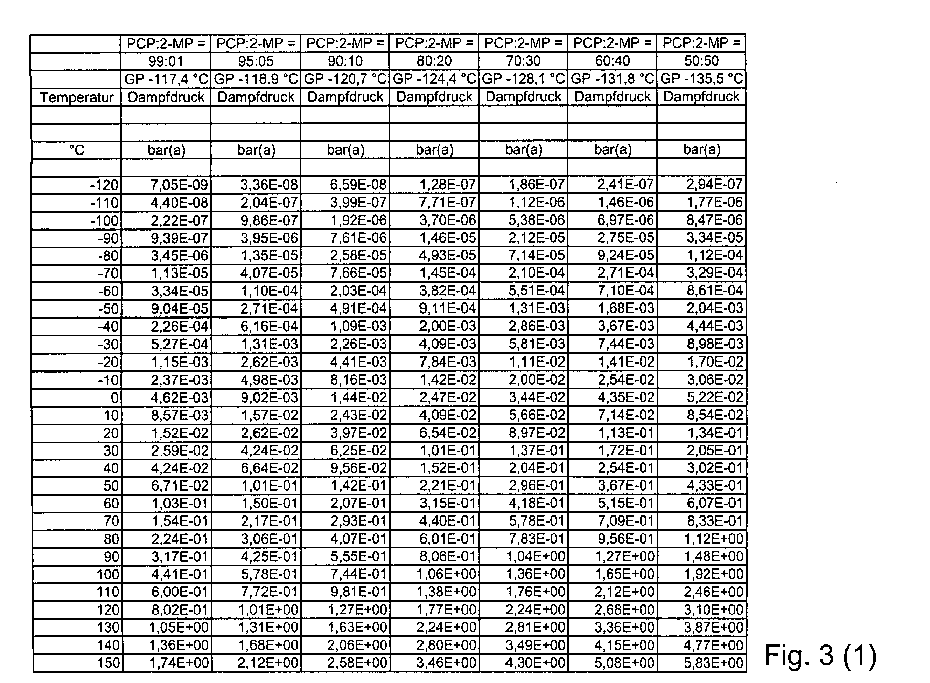

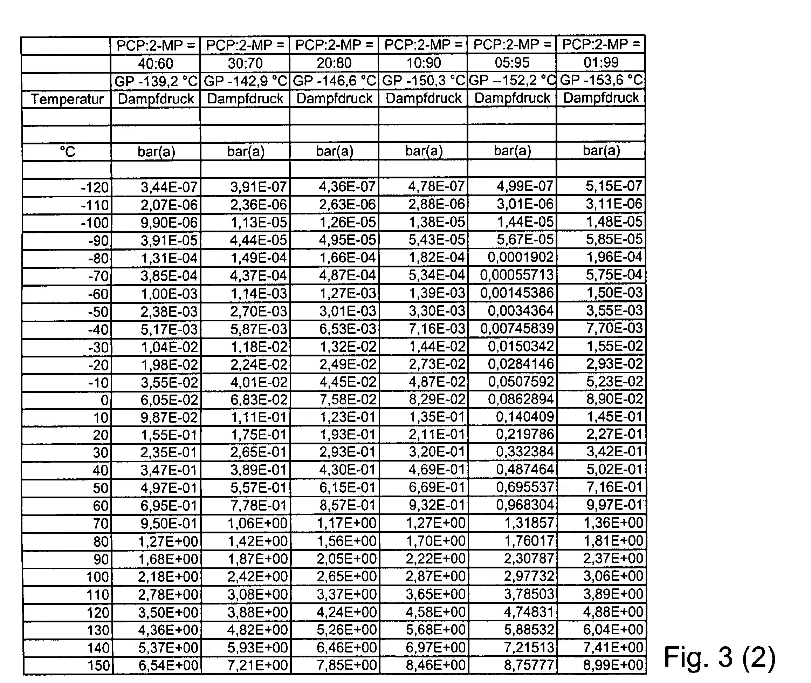

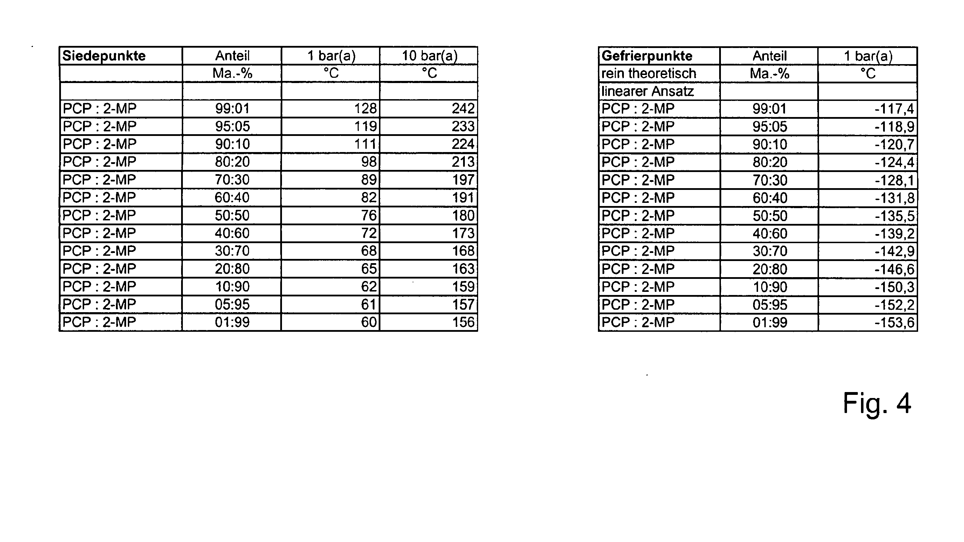

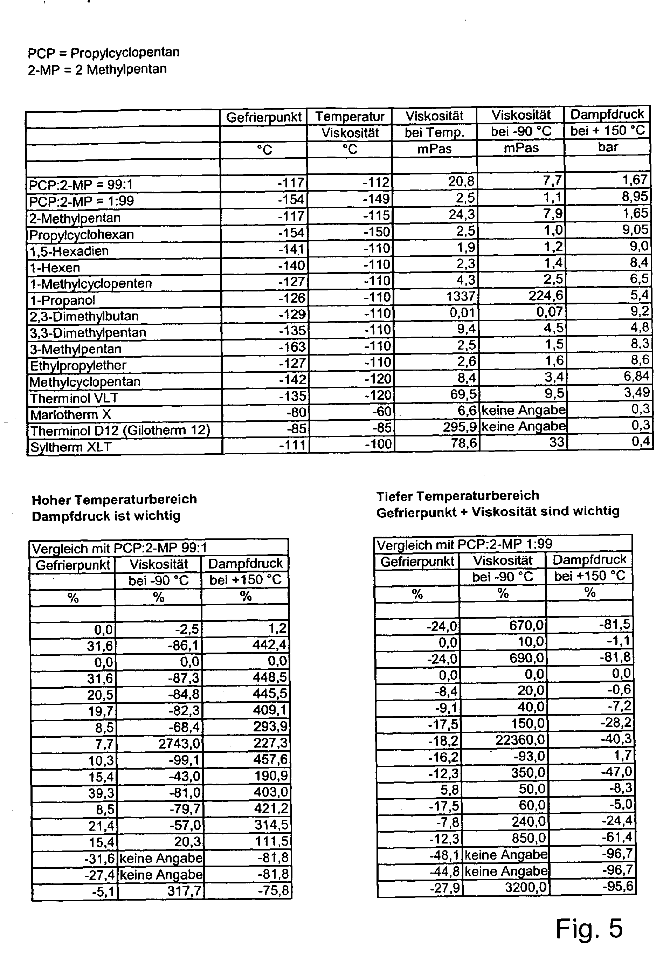

Durch eine genaue Einstellung des Mischungsverhältnis von Propylcyclopentan zu 2-Methylpentan kann der Wärmeträger speziell auf die Anforderungen des Prozesses eingestellt werden. Hierzu wird auf die Figuren 2 bis 5 verwiesen, wo die Eigenschaften (z.B. Viskosität, Dampfdruck, Gefrierpunkt, Siedepunkt, etc,) verschiedener Mischungsverhältnisse des erfindungsgemäßen Wärmeträgers tabellarisch aufgelistet sind.

Die erfindungsgemäßen Wärmeträger mit einem Mischungsverhältnis von Propylcyclopentan zu 2-Methylpentan von 1:99 bis 99:1 weisen sowohl gute Eigenschaften in ihrer Viskosität als auch im Dampfdruck auf. Sie eignen sich somit hervorragend für den Einsatz im Temperaturbereich zwischen -150°C und +150°C. Dabei müssen Wärmeübertragungsanlagen für den Einsatz bei +150 °C für die Stoffe 1 bis 6 in der Nenndruckstufe PN 10, für die Stoffe 7 bis 10 in der Nenndruckstufe PN 6 und für die Stoffe 11 bis 13 in der Druckstufe PN 2,5 ausgelegt werden. Die erforderliche Nenndruckstufe hängt vom Mischungsverhältnis von Propylcyclopentan zu 2-Methylpentan und dem dadurch festgelegten Dampfdruck ab, der in Tabelle 1 aufgeführt ist. Die Viskosität der Mischungen nahe am Gefrierpunkt liegt zwischen 0,0025 und 0,0205 Pa s. Damit weisen die Gemische eine gute Pumpfähigkeit und einen guten Wärmeübergang auch bei tiefen Temperaturen auf.

## Patentansprüche

1. Wärmeträger enthaltend Propylcyclopentan und 2-Methylpentan.
**dadurch gekennzeichnet,**
**dass** das Verhältnis zwischen Propylcyclopentan zu 2-Methylpentan entsprechend dem konkreten Einsatzfall zwischen 1:99 bis 99:1, vorzugsweise zwischen 1:99 und 60:40 für tiefe Temperaturen, zwischen 90:10 und 99:1 bei hohen Temperaturen eingestellt werden kann.

2. Wärmeträger nach Anspruch 1,
**dadurch gekennzeichnet,**
**dass** der Wärmeträger für einen Temperaturbereich zwischen - 150°C und +150°C je nach Einsatzfall eingesetzt werden kann, vorzugsweise für - 130°C und +150°C geeignet ist.

3. Wärmeträger nach Anspruch 1 oder 2,
**dadurch gekennzeichnet,**
**dass** der Wärmeträger unter einem Druck zwischen 1 bar und 10 bar, (Nenndruckstufe PN 2,5 bis PN 10) und vorzugsweise zwischen 1 bar und 6 bar (Nenndruckstufe PN 2,5 bis PN 6) verwendet wird.

4. Verwendung eines Wärmeträgers nach einem der Ansprüche 1 bis 3,
**dadurch gekennzeichnet,**
**dass** der Wärmeträger für Wärmeübertragungsanlagen in der chemischen und pharmazeutischen Industrie verwendet wird.

5. Verwendung eines Wärmeträgers nach einem der Ansprüche 1 bis 4 in einer Wärmeübertragungsanlage wobei die Wärmeübertragungsanlage zumindest einen ersten Wärmetauscher zum Kühlen des Wärmeträgers, einen zweiten Wärmetauscher zum Erhitzen des Wärmeträgers, einen Reaktor und einen Ausgleichsbehälter umfasst.

6. Verwendung eines Wärmeträger nach einem der Ansprüche 1 bis 5 in einer Wärmeübertragungsanlage,
**dadurch gekennzeichnet,**
**dass** der Wärmeträger in einem Temperaturbereich zwischen -150°C und +150°C verwendet wird.
